Europäisches Patentamt

European Patent Office

Office européen des brevets

(11) Publication number: **0 026 662**
**B1**

(12) **EUROPEAN PATENT SPECIFICATION**

(45) Date of publication of patent specification: **03.10.84**

(21) Application number: **80303424.8**

(22) Date of filing: **29.09.80**

(51) Int. Cl.³: **D 06 N 7/00, B 32 B 27/00**

(54) **Process for the manufacture of a surface covering material and method of facilitating gas and vapor release.**

(30) Priority: **28.09.79 GB 7933673**

(43) Date of publication of application:
**08.04.81 Bulletin 81/14**

(45) Publication of the grant of the patent:
**03.10.84 Bulletin 84/40**

(84) Designated Contracting States:
**BE DE FR GB LU NL SE**

(56) References cited:
**DE-B-1 560 752**
**FR-A-1 354 118**
**FR-A-2 300 674**
**FR-A-2 396 116**
**GB-A-1 525 018**
**GB-A-1 532 621**
**GB-A-1 543 472**
**US-A-3 360 422**
**US-A-3 518 102**

(73) Proprietor: **Armstrong World Industries Limited**
**Armstrong House Chequers Square**
**Uxbridge Middlesex UB 8 1NG (GB)**

(72) Inventor: **Highfield, David**
**12 Green Leas Carlton Village**
**Stockton Cleveland (GB)**

(74) Representative: **Darby, David Thomas et al**
**Abel & Imray Northumberland House 303-306**
**High Holborn**
**WC1V 7LH London (GB)**

Courier Press, Leamington Spa, England.

## Description

This invention relates to a surface covering material, especially a floor covering material.

Thermoplastic surface covering materials, especially such materials having a foamed thermoplastics layer on a fibrous substrate, have gained wide acceptance in recent years. A problem with many such materials has been, however, that differences in dimensional stability between the substrate and the thermoplastic layer impart a tendency to curl. Recently, this problem has been overcome to some extent by providing a further thermoplastic layer, or backcoat, on the other side of the substrate.

The presence of the backcoat has, however, itself caused problems in some cases, for example when the surface coating comprises a foamed layer, having on its free surface a clear, continuous, layer (a wear layer). In this case, the problem manifests itself as blistering, especially in the form of bubbles trapped under the clear wear layer.

It is believed that the blistering is caused in such cases by the backcoat preventing heat and gases escaping from the material layer during high temperature stages of manufacture, especially during the foaming step.

The present invention provides a process for the manufacture of a surface covering material comprising a porous substrate, a thermoplastic backcoat, and a thermoplastic upper layer, especially a foamed layer carrying a wear layer, wherein the backcoat is applied before the formation of the upper layer by the application of a liquid coating composition and fusion by heat to form the backcoat. The invention is characterized by including in the composition a frothing agent therefor, agitating the composition to form a froth and applying it as a froth to the substrate before heating to fuse the composition to form the backcoat.

It has surprisingly been found that, by applying a coating composition in the form of a froth, the resulting backcoat has many minute perforations which are barely visible to the naked eye, but which appear to extend through the whole thickness of the layer.

It has further been found that, despite the small size of the perforations, the problems associated with the presence of the backcoat during formation of the upper layer are greatly reduced, blistering no longer taking place.

The present invention also provides a surface covering comprising a thermoplastic backcoat, a porous substrate and a thermoplastic upper layer, especially a decorative floor covering in which the upper layer comprises a foamed layer carrying a clear wear layer, in which the backcoat has perforations extending therethrough formed by foam collapse.

Although the invention will be described in terms of its use for improving the quality of particular surface covering materials, it will be appreciated that it has utility whenever it is desired to facilitate escape of gaseous or vaporous materials, for example, the undesired by-products of a chemical reaction, within any such material that has a porous portion which has to be covered by a thermoplastic layer.

Accordingly, the present invention further provides a method of facilitating the escape of gas or vapor from within a laminated surface covering material having a porous portion covered by a layer of thermoplastic material which method comprises applying the thermoplastic material to the porous portion as a layer of liquid thermoplastic-containing coating composition in the form of a froth, which composition solidifies on heating, heating the composition to cause it to solidify and cause the froth to collapse to form perforations extending from the porous portion to the surface of the layer.

The invention is especially applicable to floor covering materials in which the porous substrate is a fibrous mat, e.g., felt, glass, asbestos or rockwool, of a thickness in excess of about 0.3 mm, e.g., a thickness of about 0.5 mm to about 0.7 mm. The invention has found especial applicability when high temperatures are needed to form the upper layer, as is the case, for example, when the layer is formed from a foamable polyvinyl plastisol composition.

As will be appreciated, the choice of frothing agent will depend on the nature of the backcoat material and a simple test is all that is necessary to establish whether a particular agent is suitable or not.

In one appropriate test the specific gravity of a composition, e.g., a plastisol, containing the candidate frothing agent is compared with the specific gravity of an otherwise identical composition, but containing no frothing agent. It has been found that if the specific gravity of the composition containing the frothing agent is at most 97% of that of the composition containing no frothing agent and preferably within the range 92 to 96% of that composition, the frothing agent is suitable for use in the composition.

A second test, the results of which confirm the first, may be carried out on the final backcoat material, e.g., the fused plastisol. In this test a plastisol containing the frothing agent is coated onto a mineral wool substrate of thickness 0.5 mm and fused at an appropriate time and temperature (for example, for a polyvinyl chloride plastisol 160 to 175°C for 1.5 to 2 minutes) to give a fused film of thickness between 0.20 and 0.25 mm. On cooling, a sample of the fused plastisol is stripped from the substrate and cut into a circle of approximately 6 cm diameter and placed in a 6 cm Buchner funnel. With full vacuum applied to the funnel, 1 ml of an aqueous ink is placed on the sample and left there for one minute. If the frothing agent is a suitable candidate at least 50% of the ink will at the end of that time have passed through the "filter" formed by the backcoat material and only a trace will remain on the surface. In a typical case, 60 to 70% of the ink will pass through and the remainder will be found to be within the backcoat material.

It has been found that surfactants, including anionic, cationic and non-ionic surfactants, are preferred frothing agents at least for polyvinyl chloride plastisols, and especially preferred surfactants are those which contain or are in admixture with water. One preferred material is sold by Allied Colloids under the trade mark Alcopol O which is a sodium dioctyl sulphosuccinate in the form of a 60% solution in alcohol/water. A further and much preferred surfactant is sold by Steetley Chemicals Limited under the trade mark Frothbel U, which is believed to be a alkyl benzene sulphonate with a molecular weight of about 400, in the form of a 25% to 30% strength aqueous solution.

As in the case of appropriate frothing agents the appropriate level may be determined by a simple experiment, too low a level producing insufficient improvement to be noticeable in the final product, while too high a level not only does not further improve porosity of the final product but may cause flocculation during blending. It has been found that 1.5% to 2.5% is a suitable range with about 2% being preferred, the percentage being by weight of the total plastisol composition.

If desired or required, as may be the case if the surface covering material is to be used in a damp environment, a sealing layer may be applied to the free surface of the backcoat, after the formation of the upper layer. The sealing layer is desirably applied so as to form a substantially continuous layer on the surface of the perforated backcoat, to cover the open ends of the perforations and reduce water penetration to the substrate and the associated danger of dimensional instability. A suitable coating may be formed by, for example, spraying a lacquer of a poly(methyl methacrylate) on the surface of the backcoat.

In the following examples, which illustrate the invention, the following words are trade marks: Breon, Lucovyl, Texanol, Lankroflex, Steetley, Triton, and Vestolit.

The following examples illustrate the invention:

### Example 1
The following plastisol formulation was prepared:

### Formulation 1

|  | Parts by weight |
| --- | --- |
| Paste dispersion grade PVC resin (Breon 130/1) | 40.0 |
| Paste dispersion grade PVC resin (Lucovyl PB 1702) | 40.0 |
| Extender grade PVC resin (Lucovyl PB 8015) | 20.0 |
| Dioctyl phthalate | 14.7 |
| Diisodecyl adipate | 15.2 |
| Texanol isobutyrate (Eastman Kodak TX1B) | 13.9 |
| Octyl epoxy tallate (Lankroflex ED-6) | 3.0 |
| Barium/zinc stabilizer (Ciba-Geigy BZ 505) | 2.0 |
| Calcium Carbonate (Steetley L140) | 20.0 |
| Titanium dioxide (Rhone — Poulenc UK RL-90) | 4.0 |
| Mineral Spirits | 1.2 |
| Frothing agent (Frothbel U) | 3.8 |

The plastisol formulation was prepared as follows. A portion of the plasticizer and all the resins were charged into a slow speed low shear ribbon mixer together with the titanium dioxide. The mix was well blended and then the calcium carbonate added and further mixing takes place to obtain a homogeneous blend. The remaining plasticizer was then added and the mix blended to a homogeneous paste.

The Frothbel-U was then added and mixed in for 1—2 minutes.

This material is coated, using a reverse roll coater, onto a mineral wool felt substrate of 0.5 mm thickness, fused at 160—175°C for 1.5 to 2 minutes to give a fused film of thickness between 0.20—0.25 mm. The film at this stage has many tiny perforations, going the full depth of the coating, barely visible to the naked eye.

To the side of the substrate remote from the backcoat there was then applied a foamable plastisol formulation of the following composition:

Formulation 2

|  | Parts by weight |
| --- | --- |
| Dispersion grade polyvinyl chloride | 600 |
| Extender grade polyvinyl chloride | 150 |
| Dioctyl phthalate | 102 |
| Butyl benzyl phthalate | 102 |
| Azodicarbonamide | 75 |
| Limestone filler | 120 |

The composition was applied to a thickness of about 0.22 mm. It was then gelled by heating to 140°C, and a clear wear layer composition of the following composition was then applied to the surface of the gelled coating.

Formulation 3

|  | Parts by weight |
| --- | --- |
| Dispersion grade polyvinyl chloride | 395 |
| Extender grade polyvinyl chloride | 150 |
| Dioctyl phthalate | 127 |
| Butyl benzyl phthalate | 119 |
| Triethylene glycol | 15 |
| Epoxytallate | 22 |
| Barium/zinc stabilizer | 15 |

The composition was applied to a thickness

of about 0.15 mm, and the material was then heated at 190°C to foam the gelled coating and fuse the wear layer. No sign of blistering could be detected in the material. A comparison test was carried out on a product identical to all respects except for the omission from the backcoat formulation (Formulation 1) of the frothing agent. No perforations were present in the backcoat material, and significant blistering was visible on the top surface of the product.

The product may have a decorative design applied thereto, for example, by printing on the surface of the foamed layer, and it may be embossed.

It has been found that the perforations are advantageously from about 0.3 to 1.0 mm apart, more especially from 0.3 to 0.5 mm.

The invention may of course be applied to any thickness of backcoat, for example, a thickness of 0.20 mm to 0.80 mm.

Example 2

Example 1 was repeated but, instead of the frothing agent specified, the same weight of a 33% by weight aqueous solution of "Triton-X-100", (isooctyl phenyl polyethoxy ethanol) was used. Similar results were obtained.

Example 3

Example 2 was repeated but using the same weight of a 66% by weight aqueous solution of Triton-X-100. Similar results were again obtained.

Example 4

Example 1 was repeated but using the same weight of Alcopol O. Although fewer perforations were observed, there was no blistering of the product.

Example 5

Example 1 was repeated but using the same weight of water instead of Frothbel U. Although the perforations were more widely spaced, there was no blistering in the final product. This example illustrates that water itself acts as a frothing agent at least for a polyvinyl chloride plastisol composition.

Example 6

Example 1 was repeated but using the following backcoat formulation instead of Formulation 1.

Formulation 4

| | Parts by weight |
|---|---|
| Paste dispersion grade PVC resin (Lucovyl PB 1202) | 50.4 |
| Paste dispersion grade PVC resin (Vestolit B7021) | 19.3 |
| Paste extender grade PVC resin (Lucovyl PB 8015) | 30.2 |
| Dioctyl phthalate | 28.2 |
| Butyl benzylphthalate/dodecyl benzene mixture | 28.2 |
| Octyl epoxy tallate | 1.45 |
| Barium/Zinc stabilizer | 1.93 |
| Calcium carbonate (Steetley L140) | 24.1 |
| Titanium Dioxide | 4 |
| Mineral spirit | 1.2 |
| Frothing agent (Frothbel-U) | 3.8 |

Results similar to those of Example 1 were obtained. A comparison test was carried out using a formulation identical to Formulation (4) but without Frothbel U. Blistering of the upper layer was clearly evident.

Example 7

Example 1 was repeated but using Alcopol O instead of Frothbel U. Although there were slightly fewer perforations on the backcoat, the product was blister-free.

Example 8

Example 1 was repeated but Formulation 1 was applied to depths sufficient to give various fused film thicknesses up to 0.8 mm. Film thicknesses of 0.66 mm and 0.77 mm gave preferred results. These films were fused at temperatures up to 185°C.

The layer formed by Formulation 2 was varied within the range from 0.2 to 0.3 mm, giving good results within this range.

The layer formed by Formulation 3 was varied in thickness between 0.15 and 0.25 mm, giving good results at all thicknesses of the range.

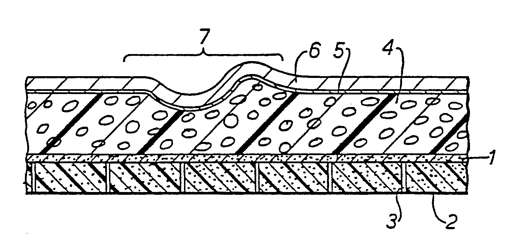

The invention is further illustrated by way of example only, by the accompanying drawing, the single figure of which is a diagrammatic cross-section through one form of surface covering produced according to the process of the invention.

A porous substrate 1 has applied thereto a thermoplastic backcoat 2 applied as a frothed composition to the face of the substrate 1 and fusing as described above, perforations 3 resulting. Subsequently, a layer 4 of foamable thermoplastic material is applied to the other face of the substrate 1, a decorative ink pattern 5 is applied, and a clear wear layer 6 applied to the free surface of the inked layer. The material is then heated to foam the layer 4 and fuse the layer 6 and embossed to form the decorative surface undulations.

Claims

1. A surface covering comprising a thermoplastic backcoat, a porous substrate and a thermoplastic upper layer, characterized in that the backcoat has perforations extending therethrough, formed by foam collapse.

2. A covering as claimed in claim 1, which is a decorative floor covering in which the upper layer comprises a foamed layer carrying a clear wear layer.

3. A covering as claimed in claim 1 or claim 2, wherein the porous substrate is a fibrous mat.

4. A covering as claimed in claim 3, wherein the fibrous mat is felt or wherein the fibres of the mat are glass, asbestos or rockwool fibres.

5. A covering as claimed in any one of claims 1 to 4, wherein the backcoat is of polyvinyl chloride.

6. A process for the manufacture of a surface covering material comprising a porous substrate, a thermoplastic backcoat and a thermoplastic upper layer, wherein the backcoat is applied before the formation of the upper layer by the application of a liquid coating composition and fusion by heat to form the backcoat, characterized in that the composition comprises a frothing agent therefor, is agitated to form a froth, and is applied as a froth to the substrate.

7. A process as claimed in claim 6, wherein the porous substrate is a fibrous mat.

8. A process as claimed in claim 7, wherein the fibrous mat is felt or wherein the fibres of the mat are glass, asbestos or rockwool fibres.

9. A process as claimed in any one of claims 6 to 8, wherein the frothing agent is a surfactant.

10. A process as claimed in any one of claims 6 to 9, wherein the frothing agent is a surfactant containing or in admixture with water.

11. A process as claimed in either of claims 9 or 10, wherein the surfactant is an anionic surfactant.

12. A process as claimed in either of claims 9 or 10, wherein the surfactant is sodium dioctyl sulphosuccinate or a sodium alkyl benzene sulphonate having a molecular weight of about 400.

13. A process as claimed in any one of claims 6 to 12, wherein the frothing agent is present in the liquid coating composition in a proportion of from 1.5% to 2.5% by weight based on the weight of the liquid coating composition.

14. A process is claimed in any one of claims 6 to 13, wherein the liquid coating composition is a polyvinyl chloride plastisol.

15. A process as claimed in any one of claims 6 to 14, wherein the thermoplastic upper layer is formed by foaming a thermoplastic composition.

16. A process as claimed in any one of claims 6 to 15, wherein a wear layer is applied to the surface of the thermoplastic upper layer.

17. A method of facilitating the escape of gas or vapor from within a laminated surface covering having a porous portion covered by a layer of thermoplastic material, which method comprises applying the thermoplastic material to the porous portion as a layer of liquid thermoplastic-containing coating composition in the form of a froth, which composition solidifies on heating, heating the composition to cause it to solidify and cause the froth to collapse to form perforations extending from the porous portion to the surface of the layer.

**Revendications**

1. Revêtement de surface, comprenant une couche envers thermoplastique, un support poreux et une couche supérieure thermoplastique, caractérisé par le fait que la couche envers possède des perforations qui la traversent complètement, formées par un affaissement de la mousse.

2. Revêtement selon la revendication 1 qui consiste en un revêtement de sol décoratif, caractérisé par le fait que la couche supérieure se compose d'une couche expansée supportant une couche d'usure claire.

3. Revêtement selon l'une des revendications 1 et 2, caractérisé par le fait que le support poreux est un mat fibreux.

4. Revêtement selon la revendication 3, caractérisé par le fait que le mat fibreux est un feutre, ou que les fibres du mat sont des fibres de verre, d'amiante ou de laine minérale.

5. Revêtement selon l'une des revendications 1 à 4, caractérisé par le fait que la couche envers est en chlorure de polyvinyle.

6. Procédé de fabrication d'un matériau de revêtement de surface comprenant un support poreux, une couche envers thermoplastique et une couche supérieure thermoplastique, dans lequel la couche envers est appliquée avant la formation de la couche supérieure par application d'une composition de revêtement liquide et fusion par la chaleur pour former la couche envers, caractérisé par le fait que la composition comprend un agent pour la faire mousser, est agitée pour former une mousse et est appliquée en tant que mousse sur le support.

7. Procédé selon la revendication 6, caractérisé par le fait que le support poreux est un mat fibreux.

8. Procédé selon la revendication 7, caractérisé par le fait que le mat fibreux est un feutre ou que les fibres du mat sont des fibres de verre, d'amiante ou de laine minérale.

9. Procédé selon l'une des revendications 6 à 8, caractérisé par le fait que l'agent moussant est un tensioactif.

10. Procédé selon l'une des revendications 6 à 9, caractérisé par le fait que l'agent moussant est un tensioactif contenant de l'eau ou en mélange avec l'eau.

11. Procédé selon l'une des revendications 9 et 10, caractérisé par le fait que le tensioactif est un tensioactif anionique.

12. Procédé selon l'une des revendications 9 et 10, caractérisé par le fait que le tensioactif est le dioctylsulfosuccinate de sodium ou un alkylbenzènesulfonate de sodium ayant une masse moléculaire d'environ 400.

13. Procédé selon l'une des revendications 6 à 12, caractérisé par le fait que l'agent moussant est présent dans la composition de revêtement liquide à raison de 1,5 à 2,5% en poids sur la base du poids de la composition de revêtement liquide.

14. Procédé selon l'une des revendications 6 à 13, caractérisé par le fait que la composition de revêtement liquide est un plastisol de chlorure de polyvinyle.

15. Procédé selon l'une des revendications 6 à 14, caractérisé par le fait que la couche supérieure thermoplastique est obtenue par moussage d'une composition thermoplastique.

16. Procédé selon l'une des revendications 6 à 15, caractérisé par le fait qu'une couche d'usure est appliquée sur la surface de la couche supérieure thermoplastique.

17. Procédé facilitant l'échappement de gaz ou de vapeur de l'intérieur d'un revêtement de surface stratifié possédant une partie poreuse recouverte par une couche d'un matériau thermoplastique, caractérisé par le fait qu'il consiste à appliquer le matériau thermoplastique sur la partie poreuse ne tant que couche d'une composition de revêtement liquide contentant un thermoplastique et se présentant sous la forme d'une mousse, ladite composition se solidfiant au chauffage, à chauffer la composition pour provoquer sa solidification et provoquer l'affaissement de la mousse pour former des perforations s'étendant de la partie poreuse à la surface de la couche.

**Patentansprüche**

1. Oberflächenbelag mit einer thermoplastischen Grundschicht, mit einem porösen Substrat und mit einer thermoplastischen Oberschicht, dadurch gekennzeichnet, daß die Grundschicht durch sie hindurchgehende Löcher aufweist, die durch Schaumzusammenbruch gebildet werden.

2. Belag nach Anspruch 1, der ein dekorativer Fußbodenbelag ist, bei welchem die Oberschicht eine geschäumte Schicht aufweist, die eine durchsichtige verschleißfeste Trittschicht trägt.

3. Belag nach Anspruch 1 oder 2, bei welchem das poröse Substrat eine Fasermatte ist.

4. Belag nach Anspruch 3, bei welchem die Fasermatte ein Filz ist oder bei welchem die Fasern der Matte Glasfasern, Asbestfasern oder Steinwollefasern sind.

5. Belag nach einem der Ansprüche 1 bis 4, bei welchem die Unterschicht aus Polyvinylchlorid besteht.

6. Verfahren zur Herstellung eines Flächenbelagmaterials, welches ein poröses Substrat, eine thermoplastische Unterschicht und eine thermoplastische Oberschicht aufweist, bei welchem die Unterschicht vor der Bildung der Oberschicht durch Auflegen einer flüssigen Beschichtungsmasse und durch Schmelzen durch Wärme zur Bildung der Unterschicht aufgebracht wird, dadurch gekennzeichnet, daß die Masse einen dafür geeigneten Schaumbildner aufweist, zur Bildung eines Schaums gerührt wird und als Schaum auf das Substrat aufgebracht wird.

7. Verfahren nach Anspruch 6, bei welchem das poröse Substrat eine Fasermatte ist.

8. Verfahren nach Anspruch 7, bei welchem die Fasermatte ein Filz ist oder bei welchem die Fasern der Matte Glasfasern, Asbestfasern oder Steinwollefasern sind.

9. Verfahren nach einem der Ansprüche 6 bis 8, dadurch gekennzeichnet, daß der Schaumbildner ein grenzflächenaktiver Stoff ist.

10. Verfahren nach einem der Ansprüche 6 bis 9, bei welchem der schaumbildner ein grenzflächenaktiver Stoff ist, der Wasser enthält oder in einer Mischung mit Wasser vorliegt.

11. Verfahren nach Anspruch 9 oder 10, bei welchem der grenzflächenaktive Stoff ein anionischer grenzflächenaktiver Stoff ist.

12. Verfahren nach Anspruch 9 oder 10, bei welchem der grenzflächenaktive Stoff Natriumdioktylsulfosukzinat oder Natriumalkylbenzosulfonat mit einem Molekulargewicht von etwa 400 ist.

13. Verfahren nach einem der Ansprüche 6 bis 12, bei welchem der Schaumbildner in der flüssigen Beschichtungsmasse in einem Anteil von 1,5 bis 2,5 Gewichtsprozent basierend auf dem Gewicht der flüssigen Beschichtungsmasse vorhanden ist.

14. Verfahren nach einem der Ansprüche 6 bis 13, bei welchem die flüssige Beschichtungsmasse ein Polyvinylchloridplastisol ist.

15. Verfahren nach einem der Ansprüche 6 bis 14, bei welchem die thermoplastische Oberschicht durch Schäumen einer thermoplastischen Masse gebildet wird.

16. Verfahren nach einem der Ansprüche 6 bis 15, bei welchem eine verschleißfeste Trittschicht auf die Oberfläche der thermoplastischen Oberschicht aufgebracht wird.

17. Verfahren zur Erleichterung des Entweichens von Gas oder Dampf aus dem Inneren eines laminierten Flächenbelags, der einen porösen Abschnitt aufweist, welcher von einer Schicht aus thermoplastischen Material bedeckt ist, wobei das Verfahren das Aufbringen des thermoplastischen Materials auf den porösen Abschnitt als Schicht einer flüssigen, ein Thermoplast enthaltenden Beschichtungsmasse in Form eines Schaums, die sich auf Erhitzen hin verfestigt, das Erhitzen der Masse zur Herbeiführung ihrer Verfgestigung und zur Herbeiführung des Schaumzusammenbruchs umfaßt, um durchgehende Löcher zu bilden, die sich von dem porösen Abschnitt zur Oberfläche der Schicht erstrecken.